(19) Europäisches Patentamt
European Patent Office
Office européen des brevets

(11) **EP 4 775 640 A1**

(12) **EUROPEAN PATENT APPLICATION**
published in accordance with Art. 153(4) EPC

(43) Date of publication:
**15.07.2026 Bulletin 2026/29**

(21) Application number: **24862878.6**

(22) Date of filing: **05.09.2024**

(51) International Patent Classification (IPC):
***C09J 133/06*** *(2006.01)* ***B32B 27/00*** *(2006.01)*
***B32B 27/30*** *(2006.01)* ***C08F 220/18*** *(2006.01)*
***C09J 7/38*** *(2018.01)* ***C09J 11/06*** *(2006.01)*
***C09J 11/08*** *(2006.01)* ***C09J 133/04*** *(2006.01)*
***C09J 133/14*** *(2006.01)* ***C09J 175/04*** *(2006.01)*
***G02B 5/30*** *(2006.01)*

(52) Cooperative Patent Classification (CPC):
**B32B 27/00; B32B 27/30; C08F 220/00; C08F 220/18; C08K 5/21; C08K 5/5415; C08L 33/04; C08L 63/00; C09J 7/20; C09J 7/38; C09J 11/06; C09J 11/08; C09J 133/00; C09J 133/04; C09J 133/06;** (Cont.)

(86) International application number:
**PCT/JP2024/031915**

(87) International publication number:
**WO 2025/053229 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 JP 2023144832**
**20.10.2023 JP 2023181269**
**13.02.2024 JP 2024019160**

(71) Applicants:
- **artience Co., Ltd.**
  **Tokyo 104-8377 (JP)**
- **Toyochem Co., Ltd.**
  **Chuo-ku**
  **Tokyo 1048379 (JP)**

(72) Inventor: **KAKINUMA, Yoshiteru**
**Tokyo 104-8379 (JP)**

(74) Representative: **SSM Sandmair Patentanwälte Rechtsanwalt Partnerschaft mbB**
**Joseph-Wild-Straße 20**
**81829 München (DE)**

(54) **ADHESIVE, ADHESIVE COMPOSITION, ADHESIVE SHEET, LAMINATE, AND DISPLAY COMPRISING SAID LAMINATE**

(57) Provided is a pressure sensitive adhesive comprising an acryl-based polymer (A) which is a copolymer of a monomer mixture, the monomer mixture containing, based on 100 mass% of the monomer mixture, more than 75 mass% and less than 90 mass% of the following monomer (a1), 0.1 mass% or more and less than 25 mass% of the following monomer (a2), wherein the content ratio of the following monomer (a3) based on 100 mass% of the monomer mixture is less than 25 mass%. Here, the monomer (a1) is 2-octyl (meth)acrylate, the monomer (a2) is a monomer such that a glass transition temperature of a homopolymer thereof is 0°C or higher (except for monomers having a carboxy group and monomers having a hydroxy group), and the monomer (a3) is a monomer other than the monomer (a1), the monomer (a2), monomers having a carboxy group and monomers having a hydroxy group.

FIG. 1

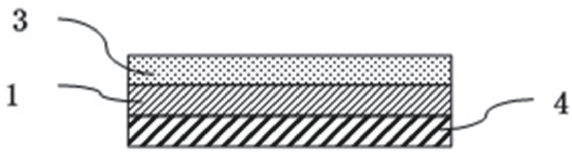


EP 4 775 640 A1

(52) Cooperative Patent Classification (CPC): (Cont.)
**C09J 133/14; C09J 175/04; G02B 5/30**

## Description

Technical Field

The present disclosure relates to a pressure sensitive adhesive, a pressure sensitive adhesive composition, a pressure sensitive adhesive sheet, a laminate, and a display comprising the laminate.

Background Art

Pressure sensitive adhesive sheets including a pressure sensitive adhesive layer formed from a pressure sensitive adhesive are easy to handle, and therefore are used in a wide range of fields including labels and medical applications. Further, the pressure sensitive adhesive sheets are widely used for various optical displays such as liquid crystal displays (LCDs) and organic electroluminescent displays (OLEDs). Optical displays are used not only as display devices, but also as input devices such as touch panels. Touch panels are equipped with a cover panel for the purpose of protecting the surface. Typically, components that make up the optical display are bonded with a pressure sensitive adhesive layer interposed between the components. Among them, pressure sensitive adhesives used for applications that are presumed to involve extended periods of use, such as marking films, window films, automotive components, and optical displays, are required to have high adhesion strength to an adherend for preventing peeling during use.

On the other hand, for convenient coating during production of a pressure sensitive adhesive sheet, the pressure sensitive adhesive is typically diluted and adjusted to a low viscosity before being used. The content of a solvent used in the adjustment of viscosity is required to be as small as possible from the viewpoint of cost and handling. If the solid content of the adjusted solution is low, it tends to be difficult to apply the pressure sensitive adhesive more thickly and uniformly, and therefore, a pressure sensitive adhesive with a low viscosity, which enables achievement of higher solid content is required.

The pressure sensitive adhesives disclosed in Patent Literatures 1 and 2 are adjusted to a solid content of about 35%. Studies by the inventors have shown that with respect to the pressure sensitive adhesives disclosed in Patent Literatures 1 and 2, adjustment to a solid content of 35% or more leads to an excessively high viscosity, so that coating becomes difficult, leading to inability to increase the solid content. As a result, there is a major problem that the cost of the solvent used increases, and it is difficult to apply the pressure sensitive adhesive thickly.

Patent Document 3 discloses a pressure sensitive adhesive composition having a low viscosity, which needs improvement in adhesion strength to an adherend.

In addition to the growing of performance requirements, the depletion of petroleum resources and the emission of carbon dioxide from combustion of petroleum-derived products are viewed as problems in the industries where pressure sensitive adhesive sheets are used. Therefore, in various industries including the fields of packaging materials, as well as the fields of optics and semiconductors, attempts have been made to save petroleum resources by using biological materials instead of petroleum-derived materials.

As a method for increasing the proportion of a biological material in a pressure-sensitive adhesive containing an acryl-based polymer as a main component, there is a method in which a monomer mixture containing a linear alkyl alcohol produced from an organism and a (meth)acrylic acid alkyl ester monomer obtained by esterifying (meth)acrylic acid is copolymerized to obtain an acryl-based polymer.

Some products of tackifier resins are made from naturally occurring components, and can be selectively used to develop environment-conscious products.

An increased proportion of environment-conscious materials can contribute to saving of petroleum resources, but involves the use of limited environment-conscious materials, and compromises properties that have been heretofore secured, for example, fixation properties such as adhesion strength. If the proportion of environment-conscious materials is further increased to, for example, a biomass content of more than 60%, fixation properties such as adhesion strength are particularly compromised.

Citation List

Patent Literature

Patent Literature 1: Japanese Patent Laid-Open No. 2007-264092
Patent Literature 2: Japanese Patent Laid-Open No. 2012-173354
Patent Literature 3: Japanese Translation of PCT International Application Publication No. 2010-506979

## Summary of Invention

### Technical Problem

A problem to be solved by the present invention is to provide a low-viscosity pressure sensitive adhesive which has a biomass content of more than 60%, and a high adhesion strength property to an adherend and in which the solid content can be increased, a pressure sensitive adhesive sheet comprising the pressure sensitive adhesive, a laminate, and a display comprising the laminate.

### Solution to Problem

The present inventors have conducted intensive studies, and found that the problems to be solved by the present invention can be solved by the following aspects, leading to completion of the present invention.

That is, the present disclosure is a pressure sensitive adhesive comprising an acryl-based polymer (A) which is a copolymer of a monomer mixture, the monomer mixture containing,

based on 100 mass% of the monomer mixture,
more than 75 mass% and less than 90 mass% of the following monomer (a1), and 0.1 mass% or more and less than 25 mass% of the following monomer (a2),
wherein a content ratio of the following monomer (a3) based on 100 mass% of the monomer mixture is less than 25 mass%:

(a1) 2-octyl (meth)acrylate
(a2) a monomer such that a glass transition temperature of a homopolymer thereof is 0°C or higher (except for monomers having a carboxy group and monomers having a hydroxy group)

(a3) a monomer other than the monomer (a1), the monomer (a2), monomers having a carboxy group and monomers having a hydroxy group.

### Advantageous Effects of Invention

According to the present disclosure, there can be provided a low-viscosity pressure sensitive adhesive which can contribute to saving of petroleum resources and has a high adhesion strength property to an adherend and in which the solid content can be increased, a pressure sensitive adhesive sheet comprising the pressure sensitive adhesive, a laminate, and a display comprising the laminate.

### Brief Description of Drawings

[Figure 1] Figure 1 is a schematic sectional view showing a part of an example of a laminate of the present disclosure.
[Figure 2] Figure 2 is a schematic sectional view showing a part of a display as an example of an application of a laminate of the present disclosure.
[Figure 3] Figure 3 is a schematic sectional view showing a part of an example of a pressure sensitive adhesive sheet of the present disclosure.

### Description of Embodiments

A pressure sensitive adhesive composition, a pressure sensitive adhesive sheet, a laminate, and a display comprising the laminate according to the present disclosure have the following configurations [1] to [25].

[1] A pressure sensitive adhesive comprising an acryl-based polymer (A) which is a copolymer of a monomer mixture, the monomer mixture containing, based on 100 mass% of the monomer mixture,

more than 75 mass% and less than 90 mass% of the following monomer (a1), and 0.1 mass% or more and less than 25 mass% of the following monomer (a2),
wherein a content ratio of the following monomer (a3) based on 100 mass% of the monomer mixture is less than

25 mass%:

(a1) 2-octyl (meth)acrylate
(a2) a monomer such that a glass transition temperature of a homopolymer thereof is 0°C or higher (except for monomers having a carboxy group, and monomers having a hydroxy group)
(a3) a monomer other than the monomer (a1), the monomer (a2), monomers having a carboxy group and monomers having a hydroxy group.

[2] The pressure sensitive adhesive according to [1], wherein the monomer (a2) comprises at least one selected from the group consisting of methyl (meth)acrylate, ethyl methacrylate, isobornyl (meth)acrylate, cyclohexyl (meth) acrylate, benzyl (meth)acrylate, phenoxyethyl (meth)acrylate, and phenyl (meth)acrylate.
[3] The pressure sensitive adhesive according to [2], wherein the monomer mixture further comprises a monomer having a carboxy group or a hydroxy group.
[4] The pressure sensitive adhesive according to any of [1] to [3], wherein the monomer mixture contains 0.5 mass% or more and less than 25 mass% in total of a monomer having a carboxy group and a monomer having a hydroxy group based on 100 mass% of the monomer mixture.
[5] The pressure sensitive adhesive according to any of [1] to [4], wherein a biomass content is 60% or more.
[6] A pressure sensitive adhesive composition comprising the pressure sensitive adhesive according to any of [1] to [5], and a curing agent (B).
[7] The pressure sensitive adhesive composition according to [6], wherein the curing agent (B) comprises at least one of an isocyanate-based curing agent and an epoxy-based curing agent.
[8] The pressure sensitive adhesive composition according to [6] or [7], further comprising a silane coupling agent (C).
[9] The pressure sensitive adhesive composition according to any of [6] to [8], wherein a gel content is 40% or more.
[10] The pressure sensitive adhesive composition according to any of [6] to [9], further comprising less than 50 parts by mass of a tackifier resin (D) based on 100 parts by mass of an acryl-based polymer (A).
[11] The pressure sensitive adhesive composition according to [10], wherein the tackifier resin (D) has a biomass content of 80% or more.
[12] A pressure sensitive adhesive layer obtained using the pressure sensitive adhesive according to any of [1] to [5] or the pressure sensitive adhesive composition according to any of [6] to [11].
[13] The pressure sensitive adhesive layer according to [12], which has a haze of 1.0 or less.
[14] The pressure sensitive adhesive layer according to [12] or [13], which has a dielectric constant of 5.0 or less at 40 GHz.
[15] The pressure sensitive adhesive layer according to [14], which has a dielectric loss tangent of 0.1 or less at 40 GHz.
[16] The pressure sensitive adhesive layer according to any of [12] to [15], which has a refractive index of 1.45 or more and less than 1.52.
[17] The pressure sensitive adhesive layer according to any of [12] to [16], which has a glass bonding strength of 10 N/25 mm or more.
[18] The pressure sensitive adhesive layer according to any of [12] to [17], which has a SUS bonding strength of 5 N/25 mm or more.
[19] A pressure sensitive adhesive sheet comprising the pressure sensitive adhesive layer according to any of [12] to [18], and a release film.
[20] The pressure sensitive adhesive sheet according to [19], wherein a thickness of the release film is less than 200 μm.
[21] A laminate comprising the pressure sensitive adhesive layer according to any of [12] to [18], and a substrate.
[22] The laminate according to [21], wherein a thickness of the substrate is less than 500 μm.
[23] The laminate according to [21] or [22], wherein the substrate is a light-permeable substrate.
[24] The laminate according to any of [21] to [23], which has a total light transmittance of 60% or more.
[25] A display comprising the laminate according to any of [21] to [24], a polarizing plate, and an optical element.

Hereinafter, the composition, the pressure sensitive adhesive sheet, the laminate and display of the present disclosure will be described, but are not limited thereto.
As used herein, the (meth)acrylate includes acrylate and methacrylate, and the (meth)acryloxy group includes an acryloxy group and a methacryloxy group. The monomer is a monomer having an ethylenically unsaturated group.
As used herein, the numerical range specified using the term "to" includes numerical values written before and after the term "to" as the lower limit value and the upper limit value. The "film" and the "sheet" are not distinguished by thickness. In other words, the term "sheet" as used herein includes a film which is small in thickness, and the term "film" as used herein includes a sheet which is large in thickness.

Further, the adherend is an object to which the pressure sensitive adhesive layer of the pressure sensitive adhesive sheet is bonded.

Unless otherwise noted, various components described herein may be used independently and singly, or in combination of two or more thereof.

<<Pressure sensitive adhesive>>

The pressure sensitive adhesive of the present disclosure comprises an acryl-based polymer (A).

<Acryl-based polymer (A)>

The acryl-based polymer (A) is a copolymer of a monomer mixture, and the monomer mixture contains, based on 100 mass% of the monomer mixture,

more than 75 mass% and less than 90 mass% of the following monomer (a1), and
0.1 mass% or more and less than 25 mass% of the following monomer (a2),
wherein a content ratio of the following monomer (a3) based on 100 mass% of the monomer mixture is less than 25 mass%:

(a1) 2-octyl (meth)acrylate
(a2) a monomer such that a glass transition temperature of a homopolymer thereof is 0°C or higher (except for monomers having a carboxy group, and monomers having a hydroxy group)
(a3) a monomer other than the monomer (a1), the monomer (a2), monomers having a carboxy group, and monomers having a hydroxy group.

[Monomer (a1)]

The monomer (a1) is 2-octyl (meth)acrylate, and is represented by the following formula (1). The monomer (a1) is a biomass monomer.

(Formula 1)

[Formula 1]

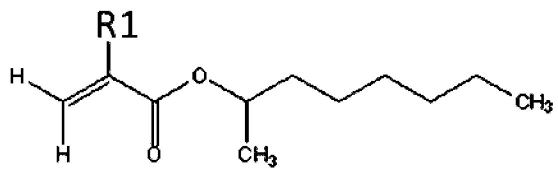

(R1 = H, $CH_3$)

The content ratio of (a1) is more than 75 mass% and less than 90 mass% based on 100 mass% of the monomer mixture. When the content ratio of (a1) is more than 75 mass% and less than 90 mass%, both adhesion strength and a high biomass content (for example, a biomass content of 60% or more) can be secured. The content ratio of (a1) may be more than 75 mass%, more than 80 mass%, or more than 85 mass%. When the above-described total content ratio is in these ranges, a greater effect can be obtained. For example, the content ratio may be more than 75 mass% and less than 90 mass%, more than 80 mass% and less than 90 mass%, or more than 85 mass% and less than 90 mass%.

[Monomer (a2)]

The monomer (a2) is a monomer such that a glass transition temperature of a homopolymer thereof is 0°C or higher. However, monomers having a carboxy group or a hydroxy group are excluded even though they are monomers such that a glass transition temperature of a homopolymer thereof is 0°C or higher.

The glass transition temperature (°C) of a homopolymer can be known from information given by a supplier of a relevant monomer or from values described in the "Polymer Handbook 3rd Edition" (A WILEY-INTERSCIENCE PUBLICATION, 1989).

Examples of the monomer (a2) include acrylamide, N,N-dimethylacrylamide, methacrylonitrile, acrylonitrile and diacetone acrylamide, methyl (meth)acrylate, ethyl methacrylate, tert-butyl methacrylate, sec-butyl methacrylate, n-butyl methacrylate, isobutyl methacrylate, isopropyl methacrylate and stearyl (meth)acrylate, isobornyl (meth)acrylate, cyclohexyl (meth)acrylate, benzyl (meth)acrylate, phenoxyethyl (meth)acrylate, and phenyl (meth)acrylate.

From the viewpoint of improving cohesion and/or bonding strength, the monomer (a2) is preferably at least one selected from the group consisting of methyl (meth)acrylate, ethyl methacrylate, isobornyl (meth)acrylate, cyclohexyl (meth)acrylate, benzyl (meth)acrylate, phenoxyethyl (meth)acrylate, and phenyl (meth)acrylate. As (a2), isobornyl (meth) acrylate that is a biomass monomer is more preferably used with consideration for the environment.

The content ratio of (a2) is 0.1 mass% or more and less than 25 mass% based on 100 mass% of the monomer mixture. When the content ratio is 0.1 mass% or more and less than 25 mass%, cohesion and/or bonding strength can be secured. The content ratio of (a2) may be 0.1 mass% or more, 5 mass% or more, or 10 mass% or more, and may be less than 25 mass%, less than 20 mass%, or less than 15 mass%. When the above-described total content ratio is in these ranges, a greater effect can be obtained. For example, the content ratio may be 0.1 mass% or more and less than 25 mass%, 5 mass% or more and less than 20 mass%, or 10 mass% or more and less than 15 mass%.

[Monomer (a3)]

The monomer (a3) is a monomer other than the monomer (a1), the monomer (a2), monomers having a carboxy group and monomers having a hydroxy group, and is not limited.

As the monomer (a3), (meth)acrylate that is a biomass monomer is preferably used with consideration for the environment, and such (meth)acrylate having a high biomass content is more preferably used.

The monomer (a3) may be, but is not required to be, contained. When (a3) is contained, the content ratio thereof is less than 25 mass% based on 100 mass% of the monomer mixture. When the content ratio is less than 25 mass%, an increase in viscosity of the pressure sensitive adhesive can be suppressed. The content ratio of (a3) may be less than 20 mass%, less than 15 mass%, or less than 10 mass%. When the above-described content ratio is in these ranges, the viscosity can be further reduced.

The monomer mixture forming the acryl-based polymer (A) preferably contains at least one of a monomer having a carboxy group and a monomer having a hydroxy group. The monomer mixture may contain both the monomer having a carboxy group and the monomer having a hydroxy group, or only one of the monomers. When at least one of the monomer having a carboxy group and the monomer having a hydroxy group is contained, the cohesion of the pressure sensitive adhesive layer is enhanced, so that adhesion strength and heat resistance are easily improved.

The total content ratio of the monomer having a carboxy group and the monomer having a hydroxy group is preferably 0.5 mass% or more and 30 mass% or less, and more preferably 0.5 mass% or more and 21 mass% or less, based on 100 mass% of the monomer mixture. When the above-described total content is 0.5 mass% or more and 30 mass% or less, it is possible to prevent acceleration of curing and whitening by heat and moisture. The total content ratio of the monomer having a carboxy group and the monomer having a hydroxy group may be 25 mass% or less, 20 mass% or less, or 15 mass% or less, and may be 0.5 mass% or more, 3 mass% or more, or 5 mass% or more. When the above-described total content ratio is in these ranges, a greater effect can be obtained. For example, the content ratio may be 0.5 to 25 mass%, 3 to 20 mass%, or 5 to 15 mass%.

The monomer having a carboxy group is not limited as long as it is a monomer having a carboxy group in the molecule, and specific examples thereof include (meth)acrylic acid, acrylic acid p-carboxybenzyl, acrylic acid β-carboxyethyl, maleic acid, monoethylmaleic acid, itaconic acid, citraconic acid, and fumaric acid.

Of these, (meth)acrylic acid is preferred, and acrylic acid is more preferred, from the viewpoint of adhesion strength.

The monomer having a hydroxy group is not limited as long as it is a monomer having a hydroxy group in the molecule, and specific examples thereof include 2-hydroxyethyl (meth)acrylate, 2-hydroxypropyl (meth)acrylate, 3-hydroxypropyl (meth)acrylate, and 4-hydroxybutyl (meth)acrylate.

Of these, 2-hydroxyethyl (meth)acrylate and 4-hydroxybutyl (meth)acrylate are preferable from the viewpoint of adhesion strength and resistance to heat and moisture.

(Production of acryl-based polymer (A))

The acryl-based polymer (A) can be produced by polymerizing the monomer mixture.

For the polymerization, known polymerization methods such as solution polymerization, bulk polymerization, emulsion polymerization and suspension polymerization are applicable, with solution polymerization being preferred. As a solvent for use in solution polymerization, for example, acetone, methyl acetate, ethyl acetate, toluene, xylene, anisole, methyl ethyl ketone, cyclohexanone, or the like is preferred. The polymerization temperature is preferably 60 to 120°C.

The polymerization time is preferably about 5 to 12 hours.

The polymerization initiator for use in polymerization is preferably a radical polymerization initiator. As the radical polymerization initiator, peroxides and azo compounds are common.

Examples of the peroxide include dialkyl peroxides such as di-t-butyl peroxide, dicumyl peroxide, t-butylcumyl peroxide, $\alpha,\alpha'$-bis(t-butylperoxy-m-isopropyl) benzene and 2,5-di(t-butylperoxy) hexane-3;

peroxyesters such as t-butyl peroxybenzoate, t-butyl peroxyacetate and 2,5-dimethyl-2,5-di(benzoylperoxy)hexane;
ketone peroxides such as cyclohexanone peroxide, 3,3,5-trimethylcyclohexanone peroxide and methylcyclohexanone peroxide;
peroxyketals such as 2,2-bis(4,4-di-t-butylperoxycyclohexyl) propane, 1,1-bis(t-butylperoxy)3,3,5-trimethylcyclohexane, 1,1-bis(t-butylperoxy) cyclohexane and n-butyl-4,4-bis(t-butylperoxy) valerate;
hydroperoxides such as cumene hydroperoxide, diisopropylbenzene hydroperoxide and 2,5-dimethylcyclohexane-2,5-dihydroperoxide;
diacyl peroxides such as benzoyl peroxide, decanoyl peroxide, lauroyl peroxide and 2,4-dichlorobenzoyl peroxide; and
peroxydicarbonates such as bis(t-butylcyclohexyl) peroxydicarbonate.

Examples of the azo compound include 2,2'-azobisnitriles such as 2,2'-azobisisobutyronitrile (abbreviated as AIBN) and 2,2'-azobis(2-methylbutyronitrile);

2,2'-azobisvaleronitriles such as 2,2'-azobis(4-methoxy-2,4-dimethylvaleronitrile) and 2,2'-azobis(2,4-dimethylvaleronitrile);
2,2'-azobispropionitriles such as 2,2'-azobis(2-hydroxymethylpropionitrile); and
1,1'-azobis-1-alkanenitriles such as 1,1'-azobis(cyclohexane-1-carbonitrile).

The polymerization initiator is preferably used in an amount of 0.01 to 10 parts by mass, more preferably 0.1 to 2 parts by mass, based on 100 parts by mass of the monomer mixture.

(Weight average molecular weight (Mw))

The weight average molecular weight of the acryl-based polymer (A) is not limited, but is preferably 2,000,000 or less, and more preferably 1,000,000 or less. The weight average molecular weight is a polystyrene-equivalent value measured by a gel permeation chromatography (GPC) method.

<<Pressure sensitive adhesive composition>>

The pressure sensitive adhesive composition of the present disclosure comprises a pressure sensitive adhesive containing the acryl-based polymer (A), and a curing agent (B). The pressure sensitive adhesive composition may comprise a silane coupling agent (C) and a tackifier resin (D) if necessary.

<Curing agent (B)>

The pressure sensitive adhesive composition of the present disclosure comprises the curing agent (B), and any curing agent (B) can be used as long as it provides a cross-linked structure to the pressure sensitive adhesive composition. By adding a curing agent, the cohesion of the pressure sensitive adhesive layer is improved, and adhesion strength, heat resistance, and light resistance are improved.

It is preferred that the curing agent (B) includes at least one of an isocyanate-based curing agent and an epoxy-based curing agent because the cohesion of the pressure sensitive adhesive can be moderately enhanced, and other physical properties are unlikely to be adversely affected. As long as at least one of an isocyanate-based curing agent and an epoxy-based curing agent is contained, known curing agents other than an isocyanate-based curing agent and an epoxy-based curing agent may be used in combination.

The isocyanate-based curing agent is an isocyanate having two or more isocyanate groups. As isocyanates, for example, aromatic polyisocyanate systems, aliphatic polyisocyanates, aromatic-aliphatic polyisocyanates, alicyclic polyisocyanates, and biuret forms, nurate forms and adduct forms thereof are preferred, and aliphatic polyisocyanates, alicyclic polyisocyanates, and biuret forms, nurate forms and adduct forms thereof are more preferred from the viewpoint of yellowing resistance.

Examples of the aromatic polyisocyanate include 1,3-phenylene diisocyanate, 4,4'-diphenyl diisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanate toluene, 1,3,5-triisocyanate benzene, dianisidine diisocyanate, 4,4'-diphenyl ether diisocyanate, and 4,4',4"-triphenylmethane triisocyanate.

Examples of the aliphatic polyisocyanate include trimethylene diisocyanate, tetramethylene diisocyanate, hexamethylene diisocyanate (also known as HMDI), pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the aromatic aliphatic polyisocyanates include ω,ω'-diisocyanate-1,3-dimethylbenzene, ω,ω'-diisocyanate-1,4-dimethylbenzene, ω,ω'-diisocyanate-1,4-diethylbenzene, 1,4-tetramethylxylylene diisocyanate, and 1,3-tetramethylxylylene diisocyanate.

Examples of the alicyclic polyisocyanates include 3-isocyanate methyl-3,5,5-trimethylcyclohexyl isocyanate (also known as IPDI, isophorone diisocyanate), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylene bis(cyclohexyl isocyanate), and 1,4-bis(isocyanate methyl)cyclohexane.

The biuret form is a self-condensed product having a biuret bond obtained by the self-condensation of an isocyanate monomer. Examples of the biuret form include biuret forms of hexamethylene diisocyanate.

The nurate form is a trimer of isocyanate monomers. For example, trimers of hexamethylene diisocyanate, trimers of isophorone diisocyanate, and trimers of tolylene diisocyanate.

The adduct form is a difunctional or higher functional isocyanate compound obtained by reaction of an isocyanate monomer and a difunctional or higher functional low-molecular active hydrogen-containing compound. Examples of the adduct form include compounds obtained by reacting trimethylolpropane and hexamethylene diisocyanate, compounds obtained by reacting trimethylolpropane and tolylene diisocyanate, compounds obtained by reacting trimethylolpropane and xylylene diisocyanate, compounds obtained by reacting trimethylolpropane and isophorone diisocyanate, and compounds obtained by reacting 1,6-hexanediol and hexamethylene diisocyanate.

The isocyanate compound is preferably a trifunctional isocyanate compound from the viewpoint of forming a sufficiently cross-linked structure. The isocyanate compound is more preferably an adduct form that is a reaction product of an isocyanate monomer and a trifunctional low-molecular active hydrogen-containing compound, as well as a nurate form. The isocyanate compound is preferably a trimethylolpropane adduct form of hexamethylene diisocyanate, a nurate form of hexamethylene diisocyanate, a trimethylolpropane adduct form of tolylene diisocyanate, a nurate form of tolylene diisocyanate, a trimethylolpropane adduct form of isophorone diisocyanate, or a nurate form of isophorone diisocyanate, and more preferably a trimethylolpropane adduct form of hexamethylene diisocyanate, a trimethylolpropane adduct form of tolylene diisocyanate, or a trimethylolpropane adduct form of isophorone diisocyanate.

Examples of the epoxy-based curing agent include glycerin diglycidyl ether, 1,6-hexanedioldiglycidyl ether, N,N,N',N'-tetraglycidyl-m-xylene diamine, 1,3-bis(N,N'-diglycidylaminomethyl)cyclohexane, and N,N,N',N'-tetraglycidylaminophenylmethane.

The curing agent (B) is preferably contained in an amount of 0.02 to 4 parts by mass, more preferably in an amount of 0.04 to 1 parts by mass, based on 100 parts by mass of the acryl-based polymer (A). When the content is 0.02 parts by mass or more, cohesion is further improved, and when the content is 4 parts by mass or less, it becomes easy to secure both cohesion and flexibility, so that sufficient adhesion strength and heat resistance, and light resistance can be easily obtained.

<Silane coupling agent (C)>

The pressure sensitive adhesive composition of the present disclosure preferably comprises the silane coupling agent (C). When the silane coupling agent (C) is contained, it is possible to improve adhesion strength, heat resistance, resistance to whitening by heat and moisture, and light resistance. The silane coupling agent (C) is preferably contained in an amount of 0.05 to 0.2 parts by mass based on 100 parts by mass of the acryl-based polymer (A). When the content of the silane coupling agent (C) is 0.05 to 0.2 parts by mass, it becomes easy to secure heat resistance, outgas resistance and light resistance.

Examples of silane coupling agent (C) include alkoxysilane compounds having a (meth)acryloxy group, alkoxysilane compounds having a vinyl group, alkoxysilane compounds having an amino group, alkoxysilane compounds having a mercapto group, and alkoxysilane compounds having an epoxy group.

Specific examples thereof include commercially available products such as KBM-403 (3-glycidoxypropyltrimethoxysilane), KBE-403 (3-glycidoxypropyltriethoxysilane) and KBM-303 (2-(3,4-epoxycyclohexyl)ethyltrimethoxysilane) (all manufactured by Shin-Etsu Chemical Co., Ltd.), and BYK-325N (polyether-modified polymethylalkylsiloxane) (manufactured by BYK Japan KK.).

<Tackifier resin (D)>

Preferably, the pressure sensitive adhesive composition of the present disclosure further includes the tackifier resin (D). As the tackifier resin (D), those that have been heretofore available, such as aliphatic petroleum-based resins, aromatic petroleum-based resins, synthetic hydrocarbon-based resins, terpene-based resins, rosin-based resins (e.g., rosin, polymerized rosin, hydrogenated rosin, and esters thereof with glycerin, pentaerythritol or the like, and resin acid dimers), and acrylic resins can all be used. The tackifier resins may be used alone or in mixture of two or more thereof.
Examples of aliphatic petroleum-based resin include Quintone B170 manufactured by Zeon Corporation, examples of the aromatic petroleum-based resin include Nisseki Neopolymer L-90 manufactured by JXTG Energy Corporation, examples of the aliphatic/aromatic petroleum-based resin include FTR 6100 manufactured by Mitsui Chemicals, Inc., and examples of the rosin derivative include Sylvatac RE85 manufactured by Arizona Chemical Company LLC., and Super Ester A-75 manufactured by Arakawa Chemical Industries, Ltd.
Examples of the synthetic hydrocarbon-based resin include aliphatic petroleum-based resins, aromatic petroleum-based resins, aliphatic/aromatic petroleum-based resins, hydrogenated petroleum-based resins, coumarone-indene resins, and phenol resins.
Examples of the terpene-based resin include $\alpha$-pinene resins, $\beta$-pinene resins, dipentene resins, aromatic modified terpene resins, hydrogenated terpene resins, terpene phenol resins, acid modified terpene resins, styrenated terpene resins, and styrene-aliphatic hydrocarbon-based copolymer resins.
Examples of the rosin-based resin include rosin esters, polymerized rosin, hydrogenated rosin, disproportionated rosin, maleic acid-modified rosin, fumaric acid modified rosin, rosin phenol resins, and natural rosin.
The content of the tackifier resin (D) is preferably less than 50 parts by mass, and more preferably 40 parts by mass or less, based on 100 parts by mass of the acryl-based polymer (A) in the pressure sensitive adhesive composition. When the tackifier resin (D) is contained, it is possible to improve bonding strength to the adherend.
The tackifier resin (D) having a biomass content of 80% or more is more preferably used with consideration for the environment.
The softening point of the tackifier resin (D) is preferably that of a higher softening point grade from the viewpoint of being able to enhance durability at a high temperature, with the softening point being preferably 90°C or higher, more preferably 120°C or higher, and further more preferably 140°C or higher.
To the pressure sensitive adhesive composition of the present disclosure, various resins, chlorinated polyolefins described later, oil, plasticizers, dyes, pigments, antioxidants and UV absorbers may be added as optional components as long as the problems can be solved.
Examples of the chlorinated polyolefin include chlorinated polypropylene, acid-modified chlorinated polypropylene, acrylic-modified chlorinated polypropylene, chlorinated polyethylene, and chlorinated ethylene-vinyl acetate copolymers. From the viewpoint of obtaining good compatibility with acryl-based polymers, and being able to effectively reduce the polarity, chlorinated polypropylene or chlorinated ethylene-vinyl acetate copolymer is preferred.
Specific examples thereof include commercially available products such as SUPERCHLON 390S (chlorinated polypropylene, chlorine content 36%) and SUPERCHLON BX (chlorinated EVA, chlorine content 18%) (both manufactured by Nippon Paper Industries Co., Ltd.).
The pressure sensitive adhesive composition of the present disclosure preferably has a gel content of 40% or more. However, depending on a use purpose, a gel content of 40% or less is acceptable. The method for measuring the gel content will be detailed in Examples.
The pressure sensitive adhesive composition of the present disclosure, which comprises the acryl-based polymer (A) that is a copolymer of a monomer mixture containing specific monomers, thus is capable of securing an effect of suppressing an increase in viscosity when an acryl-based polymer is used, and high bonding strength to the adherend. Accordingly, the amount of an organic solvent used for adjustment of viscosity during application can be made significantly smaller than before.
In the present disclosure, the viscosity at a solid content of 15% ($\pm$1) is preferably 3,000 mPa·s or less when the weight average molecular weight of the acryl-based polymer (A) is 1,900,000 to 2,000,000, the viscosity at a solid content of 35% ($\pm$1) is preferably 3,000 mPa·s or less when the weight average molecular weight of the acryl-based polymer (A) is 700,000 to 900,000, and the viscosity at a solid content of 50% ($\pm$1) is preferably 3,000 mPa·s or less when the weight average molecular weight of the acryl-based polymer (A) is 400,000 to 500,000. The method for adjusting the solid content and the method for measuring the viscosity will be described in detail in Examples.

<<Adhesive layer>>

The pressure sensitive adhesive layer is a layer obtained from the pressure sensitive adhesive or the pressure sensitive adhesive composition of the present disclosure. The method for forming a pressure sensitive adhesive layer is not limited, and is similar to an application method described later for the pressure sensitive adhesive sheet or the like.

The pressure sensitive adhesive layer of the present disclosure preferably has a haze of 1.0 or less. When the haze is 1.0 or less, transparency is further enhanced, resulting in reduced noticeability in use, and in optical applications, permeability is high enough to allow for improved usability. For the haze to be 1.0 or less, it is necessary that the glass transition temperature of the pressure sensitive adhesive be prevented from becoming excessively high by considering the types and ratios of the monomers which are used for the pressure sensitive adhesive. Some of the monomers used may have crystallinity. Development of crystallinity increases the haze, and therefore, it is also necessary that types and blending ratios of the monomers used be set with crystallinity taken into consideration. The measurement method will be described in detail in Examples.

The pressure sensitive adhesive layer of the present disclosure preferably has a dielectric constant of 5.0 or less at 40 GHz. When the dielectric constant is 5.0 or less at 40 GHz, the optimal operation of a touch sensor and the like can be improved. For the dielectric constant to be 5.0 or less, it is necessary to lower the polarity of the pressure sensitive adhesive. It is necessary to use a compound that inherently has a low polarity or to increase the number of carbon atoms contained in the compound. The measurement method will be described in detail in Examples.

The pressure sensitive adhesive layer of the present disclosure preferably has a dielectric loss tangent of 0.1 or less at 40 GHz. When the dielectric constant is 0.1 or less at 40 GHz, radiation loss of millimeter waves in a high-frequency band of millimeter waves or the like can be suppressed. For the dielectric loss tangent to be 0.1 or less, it is necessary to lower the polarity of the pressure sensitive adhesive. It is necessary to use a compound that inherently has a low polarity or to increase the number of carbon atoms contained in the compound. The measurement method will be described in detail in Examples.

The pressure sensitive adhesive layer of the present disclosure preferably has a refractive index of 1.45 or more and less than 1.52. A refractive index of 1.45 or more and less than 1.52 is advantageous because reflection of a light ray at an interface between the pressure sensitive adhesive layer and an optical member is reduced in the case of use for bonding the layers of the optical member. For the refractive index to fall within the above-described range, it is necessary to give consideration to the balance between a high-refractive material and a low-refractive material. This can be adjusted by the composition of the pressure sensitive adhesive. The adjustment can be made by the type of a base polymer, the composition ratio of monomer components, and the presence or absence, types and amounts of additives. The measurement method will be described in detail in Examples.

The glass bonding strength of the pressure sensitive adhesive sheet of the present disclosure is preferably high for the fixation of products. Lower bonding strength is applicable depending on a product, but for use in multiple applications, the peel strength is preferably 10 N/25 mm or more, and more preferably 20 N/25 mm or more. The measurement method will be described in detail in Examples.

The SUS bonding strength of the pressure sensitive adhesive sheet of the present disclosure is preferably high for the fixation of products or the like. Lower bonding strength is applicable depending on a product, but for use in multiple applications, the peel strength is preferably 5 N/25 mm or more, and more preferably 10 N/25 mm or more. The measurement method will be described in detail in Examples.

<Pressure sensitive adhesive sheet>

The pressure sensitive adhesive sheet comprises a pressure sensitive adhesive layer containing the pressure sensitive adhesive or pressure sensitive adhesive composition of the present disclosure, and a release film.

The pressure sensitive adhesive sheet of the present disclosure may have a configuration in which a release film is formed on one surface or both surfaces of the pressure sensitive adhesive layer.

<Release film>

The release film is not limited. A transparent plastic substrate can be preferably used. Examples of the material for the transparent plastic substrate include plastic materials such as polyester such as polyethylene terephthalate (PET), acryl-based resins such as polymethyl methacrylate (PMMA), polycarbonate, triacetyl cellulose, polysulfone, polyarylate, and polycycloolefin. The plastic materials can be used alone, or in combination of two or more thereof.

Among the transparent plastic substrates, transparent plastic substrates with excellent heat resistance, that is, transparent plastic substrates that are hardly deformed or are not deformed under harsh conditions including a high temperature, and a high temperature and a high humidity can be preferably used as the release film. As the transparent plastic substrate, PET films or sheets are particularly preferred.

The thickness of the release film is preferably less than 200 μm. The thickness of the film should be adjusted by handling of, for example, members used, and a thickness of less than 200μm ensures that the material itself does not have excessively high stiffness, and is easy to wind in a roll shape, and use can be made in a comfortable manner when bonding is performed with a sheet or the like.

The pressure sensitive adhesive sheet of the present disclosure has excellent adhesiveness, and therefore is

suitable for forming optical display members such as LCDs, OLEDs, and input devices such as touch panels, and bonding these members. The optical member is not limited, examples thereof include PET films, polarizing plates, phase difference plates, elliptical polarizing plates, optical compensation films, luminance improving films, infrared/electromagnetic wave cut films, front-side anti-reflection films, surface protection films, films with an ITO (indium tin oxide) layer, films with a zinc oxide (ZnO) layer, films obtained by applying or printing metal nanoparticles, films obtained by applying or printing a dispersion containing carbon nanotubes, films obtained by applying or printing a dispersion containing graphene, films obtained by applying or printing a dispersion containing conductive polymer, metal plates formed from SUS or the like, metal meshes, and laminates thereof.

For application of the pressure sensitive adhesive or the pressure sensitive adhesive composition, an appropriate liquid medium can be added to adjust the viscosity. Specific examples include hydrocarbon-based solvents such as toluene, xylene, hexane and heptane; ester-based solvents such as ethyl acetate and butyl acetate; ketone-based solvents such as acetone and methyl ethyl ketone; halogenated hydrocarbon-based solvents such as dichloromethane and chloroform; ether-based solvents such as diethyl ether, methoxy toluene, dioxane, and other hydrocarbon-based solvents. However, it is necessary that water and alcohol be carefully used because they may interfere with a reaction between the acryl-based polymer (A) and the isocyanate-based curing agent (B).

The application method is not limited, and examples thereof include various application methods with a Meyer bar, an applicator, a brush, a spray, a roller, a gravure coater, a die coater, a lip coater, a comma coater, a knife coater, a reverse coater, a spin coater or the like. The method for drying and curing is not limited, and examples thereof include hot air drying, infrared rays, a decompression method, and use of an active energy ray, and from the viewpoint of outgas resistance, hot air or steam heating at 60 to 180°C is preferred.

The thickness of the pressure sensitive adhesive layer is preferably 2 to 1,000μm, and more preferably 5 to 500μm. The pressure sensitive adhesive layer may be in the form of a single layer, or a laminate with two or more layers.

<<Laminate>>

The laminate of the present disclosure comprises a substrate, and a pressure sensitive adhesive layer. The pressure sensitive adhesive layer is formed using the pressure sensitive adhesive sheet of the present disclosure. Specifically, for example, the release film is peeled from the pressure sensitive adhesive sheet of the present disclosure, and the pressure sensitive adhesive layer is bonded to the substrate to form a laminate.

<Substrate>

The substrate is an object to which the pressure sensitive adhesive layer of the pressure sensitive adhesive sheet having the pressure sensitive adhesive layer is bonded, and the substrate is not limited to a specific thing. For example, resins such as polyolefins including polyethylene and polypropylene, polycarbonate and phenol, metals such as iron, stainless steel (SUS), aluminum and copper, and other materials such as cement, mortar, glass, non-woven fabric, woven fabric, paper, rubber, foam sheets, laminates thereof, and the like can be used. The pressure sensitive adhesive and the pressure sensitive adhesive composition of the present disclosure exhibit excellent bonding strength to at least one adherend.

The thickness of the substrate is not limited. For example, the thickness is preferably less than 500 μm, more preferably 10 to 200 μm, and further more preferably 25 to 150 μm.

<Light-permeable substrate>

As the substrate of the laminate of the present disclosure, a light-permeable substrate can be used. As the light-permeable substrate, a transparent plastic substrate is used. Examples of material for the light-permeable substrate include plastic materials such as polyethylene terephthalate (PET) and polyethylene naphthalate, acryl-based resins such as polymethyl methacrylate (PMMA), polycarbonate (PC), polycycloolefin, polyimide, polyphenylene ether, polysulfone, polyethersulfone, polystyrene, and polypropylene. A PET film, or PC is preferred, with PC being more preferred from the viewpoint of durability.

The plastic materials can be used alone, or in combination of two or more thereof. Appropriate surface treatment, for example, physical treatment such as corona discharge treatment or plasma treatment, or chemical treatment such as priming treatment may be performed on the light-permeable substrate.

For the laminate comprising a light-permeable substrate, the total light transmittance of the pressure sensitive adhesive sheet is preferably 60% or more.

The laminate having a light-permeable substrate has a configuration of, for example, light-permeable substrate/pressure sensitive adhesive layer/polarizing plate. In this case, the laminate preferably includes a light-permeable substrate, a pressure sensitive adhesive layer, and a polarizing plate in the stated order. This enables the laminate to have

excellent transparency.

Figure 1 shows an example of a schematic sectional view showing a part of the laminate of the present disclosure. In Figure 1, reference numeral 3 denotes a light-permeable substrate (cover panel), reference numeral 1 denotes a pressure sensitive adhesive layer, and reference numeral 4 denotes a polarizing plate. In the laminate shown in Figure 1, the light-permeable substrate (cover panel) is bonded to the polarizing plate with the pressure sensitive adhesive layer interposed therebetween.

Figure 3 shows a schematic sectional view showing a part of an example of the pressure sensitive adhesive sheet of the present disclosure. In Figure 3, reference numeral 3 denotes a light-permeable substrate (cover panel), reference numeral 1 denotes a pressure sensitive adhesive layer, and reference numeral 2 denotes a release film. In the release sheet shown in Figure 3, the release film 2 can be peeled to bond the light-permeable substrate (cover panel) 1 to the polarizing plate or the like with the pressure sensitive adhesive layer 1 interposed therebetween.

<Production of laminate>

As a method for producing the laminate, the laminate can be formed by, for example, peeling release films from a pressure sensitive adhesive sheet with the release films on both surfaces of a pressure sensitive adhesive layer, and bonding the pressure sensitive adhesive layer to each of a light-permeable flexible substrates and a substrate such as a polarizing plate. It is also possible to form the laminate by forming the pressure sensitive adhesive layer directly on a light-permeable flexible substrate, and then bonding to the pressure sensitive adhesive layer the substrate or a pressure sensitive adhesive layer of another pressure sensitive adhesive sheet.

<<Display>>

The display comprises the laminate of the present disclosure, a polarizing plate, and an optical element. Thus, the display of the present disclosure has excellent visibility.

The optical element is not limited, and examples thereof include liquid crystal elements, and organic EL elements.

Figure 2 shows an example of a schematic sectional view showing a part of the display as an example of an application of the pressure sensitive adhesive sheet of the present disclosure. In Figure 2, reference numeral 3 denotes a light-permeable substrate (cover panel), reference numeral 1 denotes a pressure sensitive adhesive layer 1, reference numeral 4 denotes a polarizing plate, reference numeral 5 denotes a pressure sensitive adhesive layer 2, reference numeral 6 denotes a barrier layer of silicon nitride or the like, reference numeral 7 denotes an organic EL layer, reference numeral 8 denotes a support of polyimide or the like, and reference numeral 9 denotes an organic EL cell. The configuration of the display is not limited to that in Figure 2.

In the display shown in Figure 2, the light-permeable substrate (cover panel) is bonded to the polarizing plate with the pressure sensitive adhesive layer of the present disclosure (pressure sensitive adhesive layer 1) interposed therebetween, and bonded to the organic EL cell with the polarizing plate pressure sensitive adhesive layer (pressure sensitive adhesive layer 2) interposed therebetween. Thus, the pressure sensitive adhesive sheet of the present disclosure can be used in a form where the transparent pressure sensitive adhesive layer formed from the pressure sensitive adhesive is bonded to the light-permeable substrate (cover panel) and the polarizing plate, and the laminate is bonded to the organic EL with the polarizing plate pressure sensitive adhesive layer interposed therebetween.

For example, in Figure 2, the pressure sensitive adhesive layer of the present disclosure can be used as either the pressure sensitive adhesive layer 1 or the pressure sensitive adhesive layer 2.

In general, comparison between the pressure sensitive adhesive layer 1 and pressure sensitive adhesive layer 2 shows that the quality which the pressure sensitive adhesive layer 1 is required to have is higher, and the pressure sensitive adhesive of the present disclosure has good adhesion and bondability to the substrate. Therefore, use as the pressure sensitive adhesive layer 1 is preferred. Here, as the pressure sensitive adhesive for formation of the pressure sensitive adhesive layer 2, the pressure sensitive adhesive of the present disclosure may be used, or a heretofore known pressure sensitive adhesive may be used.

There is no limitation on the application of the display, and the display is used for organic EL televisions, organic EL smartphones, organic EL tablets, organic EL smartwatches, and the like.

To respond to the recent tendency that environment-conscious materials are desired, a pressure sensitive adhesive and a pressure sensitive adhesive composition partially or entirely composed of biological materials can be provided as the pressure sensitive adhesive and the pressure sensitive adhesive composition of the present disclosure by using a biomass monomer as a monomer for forming the acryl-based polymer (A), and a tackifier from biomass. The biomass content is preferably 60% or more. The usefulness as an environment-conscious material is enhanced as the biomass content increases. The method for calculating the biomass content will be described in Examples.

Examples

Hereinafter, the present disclosure will be described in more detail by way of Examples, which should not be construed as limiting the present disclosure. In Examples, unless otherwise specified, the term "parts" indicates "parts by mass," and the term "%" indicates "mass %". The addition amounts in the tables are in parts by mass, and are given in terms of non-volatile content except for solvents. The blank in the table indicates that a relevant component is not added.

Since it is a common technical knowledge that the viscosity of the pressure sensitive adhesive composition increases or decreases depending on Mw of the acryl-based polymer (A), and the Mw of the acryl-based polymer (A) can be appropriately adjusted, it is not practical to confirm the effects of the present disclosure over the entire range of Mw of the acryl-based polymer (A). Therefore, in Examples, the acryl-based polymer (A) was produced such that Mw was 400,000 to 500,000, 700,000 to 900,000, or 1,900,000 to 2,000,000, and evaluation was performed.

The method for measuring the weight average molecular weight of the acryl-based polymer is shown below.

<Measurement of weight average molecular weight (Mw) and Mw classification evaluation method>

The weight average molecular weight (Mw) was measured by gel permeation chromatography (GPC). The apparatus used was a GPC apparatus LC-GPC system: "Prominence" manufactured by Shimadzu Corporation. TSKgel $\alpha$-M manufactured by Tosoh Corporation was used as a column. Two columns were connected in series. The measurement was performed at 40°C with N,N-dimethylformamide (DMF) used as an eluent. Mw was determined in terms of a standard substance, where polystyrene, whose Mw is known, was used as the standard substance.

The weight average molecular weight (Mw) of the acryl-based polymer is measured. A classification as U is made when Mw is 1,900,000 to 2,000,000, a classification as H is made when Mw is 700,000 to 900,000, and a classification as L is made when Mw is 400,000 to 500,000, which is used as an evaluation result.

(Production of acryl-based polymer)

<Reference Production Example 1: Production of (A-1)>

A reactor equipped with a stirrer, a reflux cooling tube, a nitrogen introduction tube, a thermometer and a dropping tube was used. The inside of a reaction vessel was charged with ethyl acetate as a polymerization solvent, and a reaction tank was charged with a monomer mixture of 19.75 parts of 2-octyl acrylate (2-OA) as a monomer (a1), 20 parts of methyl acrylate (MA) as a monomer (a2), 3 parts of isobornyl acrylate (IBXA) as a monomer (a3), 7 parts of 2-hydroxyethyl acrylate (HEA) and 0.25 parts of 4-hydroxybutyl acrylate (4HBA), and 0.04 parts of azobisisobutyronitrile as an initiator. A solution obtained by adding and mixing the monomer mixture of 19.75 parts of 2-octyl acrylate (2-OA), 20 parts of methyl acrylate (MA) as the methyl acrylate, 3 parts of isobornyl acrylate (IBXA) as the monomer (a3), 7 parts of 2-hydroxyethyl acrylate (HEA) and 0.25 parts of 4-hydroxybutyl acrylate (4HBA), ethyl acetate as the polymerization solvent, and 0.02 parts of azobisisobutyronitrile as the initiator was dropped from the dropping tube over about 2 hours, and polymerized in a nitrogen atmosphere at about 80°C for 6 hours. After the reaction was completed, the reaction product was cooled, and diluted with ethyl acetate to obtain an acryl-based polymer solution. The obtained acryl-based polymer is referred to as (A'-7). Table 1 shows the results of measuring the weight average molecular weight (Mw) of the obtained acryl-based polymer.

<Examples 1 to 4, Comparative Production Examples 1 to 6 and Reference Production Examples 2 to 4: Production of (A-1 to A-4, A'-1 to A'-6 and A'-8 to A'-10)>

Acryl-based polymers (A-1 to A-4 and A'-1 to A'-6 and A'-8 to A'-10) were produced in the same manner as in the production of the acryl-based polymer (Reference Production Example 1) except that the composition and addition amount (parts by mass) were changed to those described in Table 1. Table 1 shows Mw classifications of the obtained acryl-based polymers.

[Table 1]

| Table 1 | | Reference Production Example 1 | Reference Production Example 2 | Example 1 | Example 2 | Example 3 | Example 4 | Reference Production Example 3 | Reference Production Example 4 | Comparative Production Example 1 | Comparative Production Example 2 | Comparative Production Example 3 | Comparative Production Example 4 | Comparative Production Example 5 | Comparative Production Example 6 |
|---|---|---|---|---|---|---|---|---|---|---|---|---|---|---|---|
| Acryl-based polymer | | A'-7 | A'-8 | A-1 | A-2 | A-3 | A-4 | A'-9 | A'-10 | A'-1 | A'-2 | A'-3 | A'-4 | A'-5 | A'-6 |
| Monomer (a1) | 2-OA | 39.5 | 50 | 85 | 85 | 85 | 85 | | 45 | | | | | 85 | 20 |
| | 2-OMA | | | | | | | 50 | | | | | | | |
| Monomer (a2) | MA | 40 | 15 | | | | | 15 | 39 | 40 | 15 | | | | 40 |
| | MMA | | | 5 | 10 | 11 | 15 | | | | | 10 | 10 | | |
| | IBXA | 6 | 20.5 | | | | | 20.5 | 15 | 6 | 20.5 | | | | 6 |
| OH monomer/ COOH monomer | HEA | 14 | 14 | | | | | 14 | | 14 | 14 | | | 14 | 14 |
| | 4HBA | 0.5 | 0.5 | 10 | 5 | | | 0.5 | | 0.5 | 0.5 | 5 | | 1 | 0.5 |
| | AA | | | | | 4 | | | | | | | 5 | | |
| Other monomer (a3) | 2EHA | | | | | | | | | | 50 | | | | |
| | BA | | | | | | | | | 39.5 | | 85 | 85 | | 20 |
| Mw classification | | H | L | L | H | L | L | L | L | H | H | H | L | L | H |

<Examples 14 and 15, Examples 18 to 21, Reference Production Examples 5 to 9 and Comparative Production Examples 7 and 8: Production of (A-5 to A-10 and A'-11 to A'-17)>

Acryl-based polymers (A-5 to A-10 and A'-11 to A'-17) were produced in the same manner as in the production of the acryl-based polymer (Reference Production Example 1) except that the composition and addition amount (parts by mass) were changed to those described in Tables 2 and 3. Tables 2 and 3 show Mw classifications of the obtained acryl-based polymers.

[Table 2]

| Table 2 | | Reference Production Example 5 | Reference Production Example 6 | Reference Production Example 7 | Reference Production Example 8 | Reference Production Example 9 | Example 14 | Example 15 |
|---|---|---|---|---|---|---|---|---|
| Acryl-based polymer | | A'-11 | A'-12 | A'-13 | A'-14 | A'-15 | A-5 | A-6 |
| Monomer (a1) | 2-OA | 40 | 50 | 69 | 39.5 | 72.1 | 84.2 | 89 |
| | 2-OMA | | | | | | | |
| Monomer (a2) | MA | | 15 | 30 | 46 | 23.9 | | |
| | MMA | | | | | | 15 | |
| | IBXA | | | | | | | 5 |
| | BMA | 45 | | | | | | |
| OH monomer/ COOH monomer | HEA | 15 | 30 | | 14 | | | 5 |
| | 4HBA | | | 1 | 0.5 | | 0.5 | |
| | AA | | 5 | | | 4 | 0.3 | 1 |
| Mw classification | | H | H | U | H | L | L | H |

[Table 3]

| Table 3 | | Example 18 | Example 19 | Example 20 | Example 21 | Comparative Production Example 7 | Comparative Production Example 8 |
|---|---|---|---|---|---|---|---|
| Acryl-based polymer | | A-7 | A-8 | A-9 | A-10 | A'-16 | A'-17 |
| Monomer (a1) | 2-OA | 75.5 | 75.5 | | 76 | 99.4 | |
| | 2-OMA | | | 76 | | | |
| Monomer (a2) | MA | 15 | 6.5 | | | | |
| | MMA | | | 1 | | | |
| | IBXA | | | | | | |
| | BMA | | | | 16 | | 19 |
| OH monomer/ COOH monomer | HEA | | | | | | |
| | 4HBA | | | | | | |
| | AA | 2.5 | 8 | 3 | 2 | 0.6 | 1 |
| Other monomer (a3) | LA | 7 | 10 | 20 | 6 | | 80 |
| Mw classification | | U | H | L | H | L | H |

The abbreviations are as follows. The biomass content is described only for monomers whose biomass contents were confirmed.

[Monomer (a1)]

2-OA: 2-octyl acrylate (biomass content 73%)
2-OMA: 2-octyl methacrylate (biomass content 67%)

[Monomer (a2)]

MA: methyl acrylate (Tg: 8°C)
MMA: methyl methacrylate (Tg: 105°C)
IBXA: isobornyl acrylate (Tg: 97°C, biomass content 76%)
BMA: butyl methacrylate (Tg: 20°C)

[Monomer with hydroxy group (OH monomer) and monomer with carboxy group (COOH monomer)]

HEA: hydroxyethyl acrylate
4HBA: 4-hydroxynormalbutyl acrylate
AA: acrylic acid

[Other monomer (a3)]

2EHA: 2-ethylhexyl acrylate (Tg: -70°C)
BA: n-butyl acrylate (Tg: -55°C, biomass content 57%)
LA: lauryl acrylate (Tg: -23°C, biomass content 80%)

<Example 5>

To 100 parts of the acryl-based polymer (A-1), 0.2 parts of "D-165N" (manufactured by Mitsui Chemicals, Inc., a biuret form of hexamethylene diisocyanate) was added as a curing agent (B) to obtain a pressure sensitive adhesive composition.

The obtained pressure sensitive adhesive composition was applied as a releasable sheet onto a 38 μm-thick release liner (SP-PET-O1-BU manufactured by Mitsui Chemicals Tohcello, Inc.) using a comma coater such that the thickness after drying was 25 μm, drying was performed at 110°C for 3 minutes, and a 75 μm-thick release liner (SP-PET-O3-B3: manufactured by Mitsui Chemicals Tohcello, Inc.) was then bonded to the pressure sensitive adhesive layer. In this state, aging was allowed to proceed at 23°C for 7 days, thereby obtaining a pressure sensitive adhesive sheet.

<Examples 6 to 10, Examples 12 and 13, Examples 16 and 17, Examples 22 to 27, Comparative Examples 1 to 10 and Reference Examples 1 to 14>

Pressure sensitive adhesive compositions and pressure sensitive adhesive sheets were prepared in the same manner as in Example 5 except that the types and the addition amounts of the acryl-based polymer, the curing agent (B), the silane coupling agent (C) and the tackifier resin (D) were changed as shown in Table 4.

<Example 11>

A pressure sensitive adhesive sheet was prepared in the same manner as in Example 5 except that the acryl-based polymer (A-4) obtained in Example 4 was used as a pressure sensitive adhesive.

<Gel content measurement>

The 38μm release liner of the obtained pressure sensitive adhesive sheet was peeled, and the pressure sensitive

adhesive layer was bonded to a PET film substrate (COSMOSHINE A-4360 manufactured by Toyobo Co., Ltd., thickness 100 μm), cut into a size of 30 mm in width and 100 mm in length to prepare a test pressure sensitive adhesive sheet. Further, the release liner on the other surface of the pressure sensitive adhesive tape was peeled to prepare a test piece, and the weight was measured. The test piece was immersed in ethyl acetate at 23°C for 24 hours, then taken out from the ethyl acetate, and dried under the condition of 150°C for 30 minutes. The weight of the dried test piece was measured, and the gel content was calculated using the following expression (1). In Table 4, "40% <" means that the gel content is more than 40%.

$$\text{Gel Content (wt\%)} = 100 \times (W2 - W0) / (W1 - W0) \ .... \ (1)$$

(WO: weight of the substrate (PET film), W1: weight of test piece before immersion, W2: weight of test piece after immersion and drying)

<Calculation of biomass content>

The biomass content of the pressure sensitive adhesive composition was calculated using the following expression (2) (in the case of a system in which there are two components (A and B) as the monomer and one component as the tackifier (C)).

$$\text{Biomass content} = \{(Aw \times Ab) + (Bw \times Bb) + (Cw \times Cb)\} / (Aw + Bw + Cw) \cdots\cdot(2)$$

Aw: weight of monomer A, Bw: weight of monomer B, Cw: weight of tackifier
Ab: Biomass content of monomer A (%), Bb: Biomass content of monomer B (%)
Cb: Biomass content of monomer C (%)

When the biomass content is specified as a range, the minimum value thereof is used for the above calculation.
A biomass content of 60% or more ensures usefulness as an environmentally-conscious material.
The materials used in Examples and Comparative Examples are listed below.

<Curing agent (B)>

D-165N: a biuret form of hexamethylene diisocyanate manufactured by Mitsui Chemicals, Inc.
Tetrad X: multifunctional epoxy resin manufactured by Mitsubishi Gas Chemical Company, Inc.
Aluminum chelate A: a chelate curing agent manufactured by Kawaken Fine Chemicals Co., Ltd.

<Silane coupling agent (C)>

KBE-403: (3-glycidoxypropyltriethoxysilane manufactured by Shin-Etsu Chemical Co., Ltd.)

<Tackifier resin (D)>

A-100: (Super Ester A-100 manufactured by Arakawa Chemical Industries, Ltd., biomass content 95-100%, softening point 95°C-105°C)
Evaluation of the low-viscosity property of the pressure sensitive adhesives and the pressure sensitive adhesive compositions obtained in Examples 5 to 10, Examples 12 and 13, Examples 16 and 17, Examples 22 to 27, Comparative Examples 1 to 10, and Reference Examples 1 to 14, and measurement of the pressure sensitive bonding strength of the pressure sensitive adhesive sheets are performed by the following methods. The bonding strength is judged to be practicable when the evaluation result "Acceptable" or a better evaluation result was obtained for the bonding strength to an adherend that is one of glass and SUS. When the bonding strength to one of the adherends is "Good", evaluation of the bonding strength to the other adherend was omitted. The slash in Table 5 indicates that the evaluation was not performed. Table 5 shows the results.

<Low-viscosity property>

For the pressure sensitive adhesives and the pressure sensitive adhesive compositions of Examples 5 to 10,

Examples 12 and 13, Examples 16 and 17, Examples 22 to 27, Comparative Examples 1 to 10, and Reference Examples 1 to 14, the viscosity was measured by the following method, and the low-viscosity property was evaluated.

The solid content was adjusted to 15% (±1) when the weight average molecular weight (Mw) of the acryl-based polymer contained is 1,900,000 to 2,000,000 (U), the solid content was adjusted to 35% (±1) when Mw was 700,000 to 900,000 (H), and the solid content was adjusted to 50% (±1) when Mw is 400,000 to 500,000 (L). The viscosity was measured using a Brookfield viscometer (rotor No. M3, rotation speed: 12 rpm).

The solid content was adjusted using ethyl acetate.

[Evaluation criteria]

A: The viscosity is less than 3,000 mPa·s: Good
B: The viscosity is 3,000 mPa·s or more and less than 4,000 mPa·s: Acceptable
C: The viscosity is 4,000 mPa·s or more: Unacceptable

<Glass bonding strength>

The 38μm release liner of the obtained pressure sensitive adhesive sheet was peeled, and the pressure sensitive adhesive layer was bonded to a PET film substrate (COSMOSHINE A-4360 manufactured by Toyobo Co., Ltd., thickness 100 μm), cut into a size of 25 mm in width and 100 mm in length to prepare a test pressure sensitive adhesive sheet. The 75μm release liner that is the other release liner of the test pressure sensitive adhesive sheet was peeled, and in an atmosphere at 23°C and a relative humidity of 50% (50% RH), the pressure sensitive adhesive layer was bonded to a glass plate, and pressed with a roller according to JIS Z-0237. Twenty four hours after the pressing, the peel strength (peel angle 180°, peel speed 300 mm/min; unit N/25 mm width) was measured using a tensile tester (Tensilon: manufactured by Orientec Co., Ltd.).

[Evaluation criteria]

A: The peel strength is 20 N/25 mm or more: Good

B: The peel strength is 10 N/25 mm or more and less than 20 N/25 mm: Acceptable

C: The peel strength is less than 10 N/25 mm: Unacceptable

<SUS bonding strength>

Measurement was performed in the same manner as in the measurement of glass bonding strength except that the adherend was changed from the glass plate to the SUS plate.

[Evaluation criteria]

A: The peel strength is 10 N/25 mm or more: Good

B: The peel strength is 5 N/25 mm or more and less than 10 N/25 mm: Acceptable

C: The peel strength is less than 5 N/25 mm: Unacceptable

[Table 4]

| Table 4 | Acryl-based polymer | | (B) Curing agent | | | (C) Silane coupling agent | (D) Tackifier resin | Gel content |
|---|---|---|---|---|---|---|---|---|
| | Name | Addition amount | D-165N | Tetrad X | Aluminum Chelate A | KBE403 | A-100 | |
| Example 5 | A-1 | 100 | 0.2 | | | | | 40%< |
| Example 6 | A-1 | 100 | 0.2 | | | | 10 | 40%< |
| Example 7 | A-2 | 100 | 0.1 | | | | | 40%< |
| Example 8 | A-2 | 100 | 0.1 | | | | 10 | 40%< |
| Example 9 | A-3 | 100 | | 0.03 | | | | 40%< |
| Example 10 | A-3 | 100 | | 0.03 | | | 10 | 40%< |
| Example 11 | A-4 | 100 | | | | | | 0% |
| Example 12 | A-3 | 100 | | | 0.1 | | | 40%< |
| Example 13 | A-1 | 100 | 0.2 | | | | 60 | 40%< |
| Example 16 | A-5 | 100 | 0.2 | | | | | 40%< |
| Example 17 | A-6 | 100 | | 0.03 | | | | 40%< |
| Example 22 | A-6 | 100 | | 0.03 | | | 40 | 40%< |
| Example 23 | A-7 | 100 | | 0.03 | | | | 40%< |
| Example 24 | A-8 | 100 | | 0.03 | | | | 40%< |
| Example 25 | A-9 | 100 | | 0.03 | | | | 40%< |
| Example 26 | A-9 | 100 | | 0.03 | | | 65 | 40%< |
| Example 27 | A-10 | 100 | | 0.03 | | | | 40%< |
| Comparative Example 1 | A'-1 | 100 | 0.2 | | | | | 40%< |
| Comparative Example 2 | A'-1 | 100 | 0.2 | | | 0.1 | | 40%< |
| Comparative Example 3 | A'-2 | 100 | 0.2 | | | | | 40%< |
| Comparative Example 4 | A'-2 | 100 | 0.2 | | | 0.1 | | 40%< |
| Comparative Example 5 | A'-3 | 100 | 0.1 | | | | | 40%< |
| Comparative Example 6 | A'-4 | 100 | | 0.03 | | | | 40%< |
| Comparative Example 7 | A'-5 | 100 | 0.2 | 0.2 | | | | 40%< |
| Comparative Example 8 | A'-6 | 100 | 0.2 | 0.2 | | | | 40%< |
| Comparative Example 9 | A'-16 | 100 | | 0.03 | | | | 40%< |
| Comparative Example 10 | A'-17 | 100 | | 0.03 | | | | 40%< |
| Reference Example 1 | A'-7 | 100 | 0.2 | | | | | 40%< |

(continued)

| Table 4 | Acryl-based polymer | | (B) Curing agent | | | (C) Silane coupling agent | (D) Tackifier resin | Gel content |
|---|---|---|---|---|---|---|---|---|
| | Name | Addition amount | D-165N | Tetrad X | Aluminum Chelate A | KBE403 | A-100 | |
| Reference Example 2 | A'-7 | 100 | 0.2 | | | | 10 | 40%< |
| Reference Example 4 | A'-8 | 100 | 0.2 | | | | | 40%< |
| Reference Example 5 | A'-8 | 100 | 0.2 | | | | 10 | 40%< |
| Reference Example 6 | A'-8 | 100 | 0.2 | | | 0.1 | | 40%< |
| Reference Example 7 | A'-9 | 100 | 0.2 | | | | | 40%< |
| Reference Example 8 | A'-10 | 100 | 0.2 | | | | | 40%< |
| Reference Example 9 | A'-11 | 100 | 0.2 | | | | | 40%< |
| Reference Example 10 | A'-12 | 100 | 0.2 | | | | | 40%< |
| Reference Example 11 | A'-13 | 100 | 0.2 | | | | | 40%< |
| Reference Example 12 | A'-14 | 100 | 0.2 | | | | | 40%< |
| Reference Example 13 | A'-15 | 100 | | 0.03 | | | | 40%< |
| Reference Example 14 | A'-15 | 100 | | 0.03 | | | 10 | 40%< |

For the pressure sensitive adhesive layers of Examples and Comparative Examples, the haze, the dielectric constant, the dielectric loss tangent, the refractive index, and the total light transmittance were measured by the following methods. Table 5 shows the measurement results.

<Measurement of haze and total light transmittance>

One separator was peeled from a double-sided pressure sensitive adhesive sheet, the double-sided pressure sensitive adhesive sheet was bonded to a glass slide ("Shirokenma No. 1" manufactured by Matsunami Glass Ind., Ltd., thickness 0.8-1.0 mm, total light transmittance 92%, haze 0.2%), and the other separator was peeled to prepare a test piece having a layer configuration of double-sided pressure sensitive adhesive sheet (pressure sensitive adhesive layer)/glass slide.

The total light transmittance and the haze of the test piece in a visible light region were measured in an environment at 23±1°C and 52±1% RH using a haze meter (apparatus name "HM-150", manufactured by Murakami Color Research Laboratory Co., Ltd.). Three samples were prepared for each specimen, and the total light transmittance and the haze in a visible light range were each determined as an average of the measured values for the three samples.

<Measurement of dielectric constant and dielectric loss tangent>

A sample was prepared by bonding a PET film of 25 microns to both surfaces of the pressure sensitive adhesive layer obtained in each of Examples or Comparative Examples, and the dielectric constant and dielectric loss at a frequency of 40 GHz were measured with the following apparatus. Three samples were prepared for each specimen, and the specific

permittivity and the dielectric loss tangent were each determined as an average of the measured values for the three samples. After the measurement, the measured value for PET alone was subtracted from the value for the three-layered structure of PET/pressure sensitive adhesive layer/PET by calculation, and the obtained value was taken as a measured value for the pressure sensitive adhesive layer itself.

Measurement method: a cavity resonator method, JIS R1641 IPC-TM650 2.5.5.13

Apparatus: dielectric constant measuring apparatus manufactured by AET, Inc., cavity resonator TE mode

Measurement environment: 23±1°C, 52±1% RH

<Method for measuring refractive index>

The refractive index of the pressure sensitive adhesive layer at 23°C is measured with an Abbe refractometer (manufacturer: ERMA, model: ER-2S).

[Evaluation criteria]

A: The refractive index is 1.45 or more and less than 1.52: Acceptable

C: The refractive index is less than 1.45 or 1.52 or more: Unacceptable

[Table 5]

| Table 5 | Biomass content [%] | Evaluation result | | | Physical property value of pressure sensitive adhesive layer | | | | |
|---|---|---|---|---|---|---|---|---|---|
| | | Low-viscosity property | Glass bonding strength | SUS bonding strength | Haze | Dielectric constant | Dielectric loss tangent | Refractive index | Total light transmittance |
| Example 5 | 62.1 | A | | A | <1.0 | <5 | <0.1 | A | 60%< |
| Example 6 | 65.1 | A | | A | <1.0 | <5 | <0.1 | A | 60%< |
| Example 7 | 62.1 | A | | A | <1.0 | <5 | <0.1 | A | 60%< |
| Example 8 | 65.1 | A | - | A | <1.0 | <5 | <0.1 | A | 60%< |
| Example 9 | 62.1 | A | - | A | <1.0 | <5 | <0.1 | A | 60%< |
| Example 10 | 68.3 | A | - | A | <1.0 | <5 | <0.1 | A | 60%< |
| Example 11 | 62.1 | A | - | A | <1.0 | <5 | <0.1 | A | 60%< |
| Example 12 | 62.1 | A | B | B | <1.0 | <5 | <0.1 | A | 60%< |
| Example 13 | 65.1 | A | B | B | <1.0 | <5 | <0.1 | A | 60%< |
| Example 16 | 61.5 | A | | A | <1.0 | <5 | <0.1 | A | 60%< |
| Example 17 | 68.5 | A | | A | <1.0 | <5 | <0.1 | A | 60%< |
| Example 22 | 74.4 | A | | A | <1.0 | <5 | <0.1 | A | 60%< |
| Example 23 | 60.7 | A | | A | <1.0 | <5 | <0.1 | A | 60%< |
| Example 24 | 63.1 | A | | A | <1.0 | <5 | <0.1 | A | 60%< |
| Example 25 | 71.5 | A | | A | <1.0 | <5 | <0.1 | A | 60%< |
| Example 26 | 78.4 | A | B | B | <1.0 | <5 | <0.1 | A | 60%< |
| Example 27 | 60.3 | B | B | B | <1.0 | <5 | <0.1 | A | 60%< |
| Comparative Example 1 | 27.1 | C | A | | <1.0 | <5 | <0.1 | A | 60%< |
| Comparative Example 2 | 27.1 | C | A | | <1.0 | <5 | <0.1 | A | 60%< |
| Comparative Example 3 | 15.6 | C | B | A | <1.0 | <5 | <0.1 | A | 60%< |
| Comparative Example 4 | 15.6 | C | B | A | <1.0 | <5 | <0.1 | A | 60%< |
| Comparative Example 5 | 48.5 | C | | A | <1.0 | <5 | <0.1 | A | 60%< |
| Comparative Example 6 | 48.5 | C | | A | <1.0 | <5 | <0.1 | A | 60%< |
| Comparative Example 7 | 62.1 | A | C | C | <1.0 | <5 | <0.1 | A | 60%< |

(continued)

| Table 5 | Biomass content [%] | Evaluation result | | | Physical property value of pressure sensitive adhesive layer | | | | |
|---|---|---|---|---|---|---|---|---|---|
| | | Low-viscosity property | Glass bonding strength | SUS bonding strength | Haze | Dielectric constant | Dielectric loss tangent | Refractive index | Total light transmittance |
| Comparative Example 8 | 30.6 | C | A | | <1.0 | <5 | <0.1 | A | 60%< |
| Comparative Example 9 | 72.6 | A | C | C | <1.0 | <5 | <0.1 | A | 60%< |
| Comparative Example 10 | 64.0 | C | C | C | <1.0 | <5 | <0.1 | A | 60%< |
| Reference Example 1 | 33.4 | A | A | | <1.0 | <5 | <0.1 | A | 60%< |
| Reference Example 2 | 39.0 | A | A | | <1.0 | <5 | <0.1 | A | 60%< |
| Reference Example 4 | 52.1 | A | A | | <1.0 | <5 | <0.1 | A | 60%< |
| Reference Example 5 | 56.0 | A | A | | <1.0 | <5 | <0.1 | A | 60%< |
| Reference Example 6 | 52.1 | A | A | | <1.0 | <5 | <0.1 | A | 60%< |
| Reference Example 7 | 49.1 | A | A | | <1.0 | <5 | <0.1 | A | 60%< |
| Reference Example 8 | 44.3 | A | B | B | <1.0 | <5 | <0.1 | A | 60%< |
| Reference Example 9 | 29.2 | B | A | A | <1.0 | <5 | <0.1 | A | 60%< |
| Reference Example 10 | 36.5 | B | A | A | <1.0 | <5 | <0.1 | A | 60%< |
| Reference Example 11 | 50.4 | A | A | | <1.0 | <5 | <0.1 | A | 60%< |
| Reference Example 12 | 28.8 | A | A | | <1.0 | <5 | <0.1 | A | 60%< |
| Reference Example 13 | 52.6 | A | | A | <1.0 | <5 | <0.1 | A | 60%< |
| Reference Example 14 | 56.5 | A | | A | <1.0 | <5 | <0.1 | A | 60%< |

While the present invention has been described with reference to some embodiments above, the present invention is not limited to the embodiments. Various changes can be made to the configuration and details of the present invention within the scope of the present invention.

The disclosure of the present application is related to the subject matter described in Japanese Patent Application No. 2023-144832 filed on September 6, 2023, the subject matter described in Japanese Patent Application No. 2023-181269 filed on October 20, 2023, and the subject matter described in Japanese Patent Application No. 2024-019160 filed on February 13, 2024, the disclosure of which is incorporated herein by reference in their entirety.

Reference Signs List

1 Pressure sensitive adhesive layer, 2 Release film, 3 Substrate, 4 Polarizing plate, 5 Pressure sensitive adhesive layer 2, 6 Barrier layer, 7 Organic EL layer, 8 Support, 9 Organic EL cell

## Claims

**1.** A pressure sensitive adhesive comprising an acryl-based polymer (A) which is a copolymer of a monomer mixture, the monomer mixture containing,

based on 100 mass% of the monomer mixture,
more than 75 mass% and less than 90 mass% of the following monomer (a1), and
0.1 mass% or more and less than 25 mass% of the following monomer (a2),
wherein a content ratio of the following monomer (a3) based on 100 mass% of the monomer mixture is less than 25 mass%:

(a1) 2-octyl (meth)acrylate
(a2) a monomer such that a glass transition temperature of a homopolymer thereof is 0°C or higher (except for monomers having a carboxy group, and monomers having a hydroxy group)
(a3) a monomer other than the monomer (a1), the monomer (a2), monomers having a carboxy group and monomers having a hydroxy group.

**2.** The pressure sensitive adhesive according to claim 1, wherein the monomer (a2) comprises at least one selected from the group consisting of methyl (meth)acrylate, ethyl methacrylate, isobornyl (meth)acrylate, cyclohexyl (meth) acrylate, benzyl (meth)acrylate, phenoxyethyl (meth)acrylate, and phenyl (meth)acrylate.

**3.** The pressure sensitive adhesive according to claim 1, wherein the monomer mixture further comprises a monomer having a carboxy group or a hydroxy group.

**4.** The pressure sensitive adhesive according to claim 3, wherein the monomer mixture contains 0.5 mass% or more and less than 25 mass% in total of a monomer having a carboxy group and a monomer having a hydroxy group based on 100 mass% of the monomer mixture.

**5.** The pressure sensitive adhesive according to claim 1, wherein a biomass content is 60% or more.

**6.** A pressure sensitive adhesive composition comprising the pressure sensitive adhesive according to claim 1, and a curing agent (B).

**7.** The pressure sensitive adhesive composition according to claim 6, wherein the curing agent (B) comprises at least one of an isocyanate-based curing agent and an epoxy-based curing agent.

**8.** The pressure sensitive adhesive composition according to claim 6, further comprising a silane coupling agent (C).

**9.** The pressure sensitive adhesive composition according to claim 6, wherein a gel content is 40% or more.

**10.** The pressure sensitive adhesive composition according to claim 6, further comprising less than 50 parts by mass of a tackifier resin (D) based on 100 parts by mass of an acryl-based polymer (A).

**11.** The pressure sensitive adhesive composition according to claim 10, wherein the tackifier resin (D) has a biomass

content of 80% or more.

**12.** A pressure sensitive adhesive layer obtained using the pressure sensitive adhesive according to any one of claims 1 to 5 or the pressure sensitive adhesive composition according to any one of claims 6 to 11.

**13.** The pressure sensitive adhesive layer according to claim 12, which has a haze of 1.0 or less.

**14.** The pressure sensitive adhesive layer according to claim 12, which has a dielectric constant of 5.0 or less at 40 GHz.

**15.** The pressure sensitive adhesive layer according to claim 12, which has a dielectric loss tangent of 0.1 or less at 40 GHz.

**16.** The pressure sensitive adhesive layer according to claim 12, which has a refractive index of 1.45 or more and less than 1.52.

**17.** The pressure sensitive adhesive layer according to claim 12, which has a glass bonding strength of 10 N/25 mm or more.

**18.** The pressure sensitive adhesive layer according to claim 12, which has a SUS bonding strength of 5 N/25 mm or more.

**19.** A pressure sensitive adhesive sheet comprising the pressure sensitive adhesive layer according to claim 12, and a release film.

**20.** The pressure sensitive adhesive sheet according to claim 19, wherein a thickness of the release film is less than 200 μm.

**21.** A laminate comprising the pressure sensitive adhesive layer according to claim 12, and a substrate.

**22.** The laminate according to claim 21, wherein a thickness of the substrate is less than 500 μm.

**23.** The laminate according to claim 21, wherein the substrate is a light-permeable substrate.

**24.** The laminate according to claim 23, which has a total light transmittance of 60% or more.

**25.** A display comprising the laminate according to claim 23, a polarizing plate, and an optical element.

FIG. 1

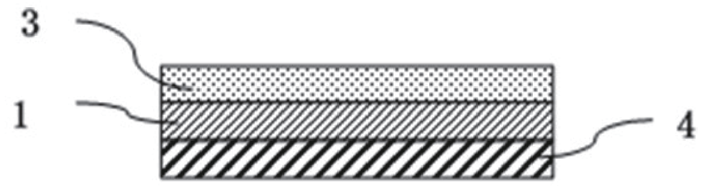


FIG. 2

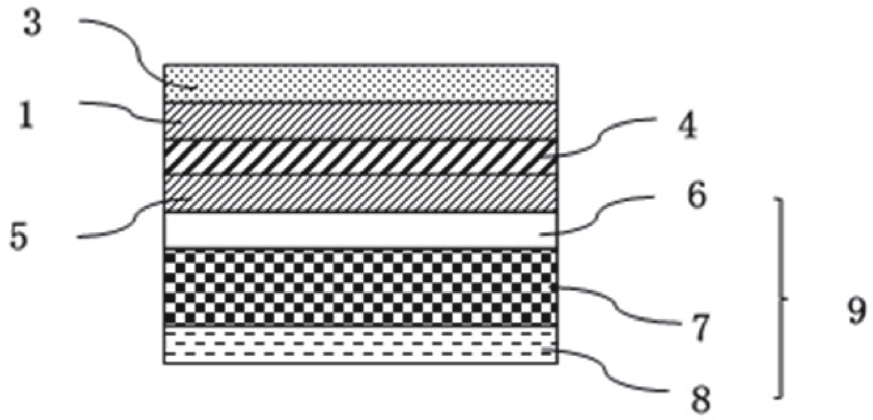


FIG. 3

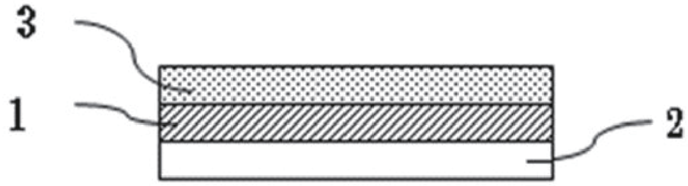

**INTERNATIONAL SEARCH REPORT**

International application No.
**PCT/JP2024/031915**

**A. CLASSIFICATION OF SUBJECT MATTER**

***C09J 133/06***(2006.01)i; ***B32B 27/00***(2006.01)i; ***B32B 27/30***(2006.01)i; ***C08F 220/18***(2006.01)i; ***C09J 7/38***(2018.01)i; ***C09J 11/06***(2006.01)i; ***C09J 11/08***(2006.01)i; ***C09J 133/04***(2006.01)i; ***C09J 133/14***(2006.01)i; ***C09J 175/04***(2006.01)i; ***G02B 5/30***(2006.01)i

FI: C09J133/06; B32B27/00 M; B32B27/30 A; C08F220/18; C09J7/38; C09J11/06; C09J11/08; C09J133/04; C09J133/14; C09J175/04; G02B5/30

According to International Patent Classification (IPC) or to both national classification and IPC

**B. FIELDS SEARCHED**

Minimum documentation searched (classification system followed by classification symbols)

C09J133/06; B32B27/00; B32B27/30; C08F220/18; C09J7/38; C09J11/06; C09J11/08; C09J133/04; C09J133/14; C09J175/04; G02B5/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/034247 A1 (TESA SE) 17 February 2022 (2022-02-17)<br>whole document, e.g. examples | 1-25 |
| A | JP 2011-516690 A (3M INNOVATIVE PROPERTIES COMPANY) 26 May 2011 (2011-05-26)<br>entire text, for example, examples | 1-25 |
| A | JP 2009-529090 A (3M INNOVATIVE PROPERTIES COMPANY) 13 August 2009 (2009-08-13)<br>entire text, for example, examples | 1-25 |
| A | JP 10-231325 A (DAICEL CHEM. IND. LTD.) 02 September 1998 (1998-09-02)<br>entire text, for example, examples | 1-25 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/031915**

**C. DOCUMENTS CONSIDERED TO BE RELEVANT**

| Category* | Citation of document, with indication, where appropriate, of the relevant passages | Relevant to claim No. |
|---|---|---|
| A | JP 2015-40237 A (SOKEN KAGAKU KK) 02 March 2015 (2015-03-02) table 1 | 1-25 |
| P, A | WO 2024/143341 A1 (SEKISUI CHEMICAL CO., LTD.) 04 July 2024 (2024-07-04) entire text, for example, examples | 1-25 |

Form PCT/ISA/210 (second sheet) (July 2022)

**INTERNATIONAL SEARCH REPORT**
**Information on patent family members**

International application No.
**PCT/JP2024/031915**

| Patent document cited in search report | Publication date (day/month/year) | Patent family member(s) | Publication date (day/month/year) |
|---|---|---|---|
| WO 2022/034247 A1 | 17 February 2022 | JP 2023-538015 A<br>US 2023/0295473 A1<br>EP 4196509 A1<br>CN 116075571 A<br>KR 10-2023-0048632 A | |
| JP 2011-516690 A | 26 May 2011 | WO 2009/129087 A1<br>whole document, e.g. examples<br>EP 2285929 A1<br>CN 102007191 A<br>TW 200951195 A<br>US 2010/0151241 A1<br>US 2012/0329898 A1 | |
| JP 2009-529090 A | 13 August 2009 | WO 2007/102977 A1<br>whole document, e.g. examples<br>EP 1991631 A1<br>KR 10-2008-0113363 A<br>CN 101400754 A<br>AT 517161 T<br>US 2007/0213448 A1 | |
| JP 10-231325 A | 02 September 1998 | (Family: none) | |
| JP 2015-40237 A | 02 March 2015 | KR 10-2015-0021880 A<br>table 1<br>TW 201508041 A | |
| WO 2024/143341 A1 | 04 July 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007264092 A
- JP 2012173354 A
- JP 2010506979 W
- JP 2023144832 A
- JP 2023181269 A
- JP 2024019160 A


### Non-patent literature cited in the description


- Polymer Handbook. WILEY-INTERSCIENCE PUBLICATION, 1989